# EUROPÄISCHE PATENTSCHRIFT

(11) **EP 3 665 460 B1**
(45) Veröffentlichungstag und Bekanntmachung des Hinweises auf die Patenterteilung: **14.12.2022**
(21) Anmeldenummer: 18743485.7
(22) Anmeldetag: 19.07.2018
(51) Int. Cl.: G01L 19/00, G01L 19/14

(54) **DRUCKSENSOR ZUM MESSEN EINES DRUCKS EINES FLUIDS UND VERFAHREN ZUM HERSTELLEN EINES DRUCKSENSORS ZUM MESSEN EINES DRUCKS EINES FLUIDS**
PRESSURE SENSOR FOR MEASURING A PRESSURE OF A FLUID AND METHOD FOR PRODUCING A PRESSURE SENSOR FOR MEASURING A PRESSURE OF A FLUID
CAPTEUR DE PRESSION DESTINÉ À MESURER UNE PRESSION D'UN FLUIDE ET PROCÉDÉ DE FABRICATION D'UN CAPTEUR DE PRESSION DESTINÉ À MESURER UNE PRESSION D'UN FLUIDE

(30) Priorität: 09.08.2017 DE 102017213863
(43) Veröffentlichungstag der Anmeldung: 17.06.2020
(73) Patentinhaber: Robert Bosch GmbH, 70442 Stuttgart (DE)
(72) Erfinder: PANHOELZL, Bernhard, 71384 Weinstadt (DE); ETTER, Daniel, 70184 Stuttgart (DE)
(86) Internationale Anmeldenummer: PCT/EP2018/069657
(87) Internationale Veröffentlichungsnummer: WO 2019/029971

(56) Entgegenhaltungen:
- EP-A1- 2 985 581
- EP-A1- 3 029 443
- DE-A1-102014 223 653
- DE-A1-102015 222 115
- DE-A1-102015 226 115

## Beschreibung

### Gebiet der Erfindung

Die Erfindung betrifft einen Drucksensor zum Messen eines Drucks eines Fluids und ein Verfahren zum Herstellen eines Drucksensors zum Messen eines Drucks eines Fluids.

### Stand der Technik

Eine Vielzahl von (Hoch-)Drucksensoren ist bekannt. Die DE 10 2015 226 115 A1 beschreibt einen Drucksensor. Der Sensor umfasst eine Ansteuer- und/oder Auswerteschaltung zum Ansteuern und/oder Auswerten eines Messsignals des Sensorelements. Die Ansteuer- und/oder Auswerteschaltung ist auf einem Schaltungsträger angeordnet, der wiederum an einem Trägerelement befestigt ist. Das Trägerelement ist zweiteilig ausgebildet, nämlich aus einem elektrisch leitfähigen und einem elektrisch isolierenden Teil, wobei der elektrisch leitfähige Teil mit Masse verbunden ist bzw. geerdet ist.

Nachteilig hieran ist, dass das Trägerelement technisch aufwendig ist und die Herstellung des Trägerelements, insbesondere aufgrund der Zweiteiligkeit des Trägerelements, aufwendig ist. Darüber hinaus ist das elektrisch leitfähige Teil des Trägerelements stets vorhanden, auch dann, wenn keine Verbindung der Ansteuer- und/oder Auswerteschaltung mit Masse bzw. keine Erdung der Ansteuer- und/oder Auswerteschaltung notwendig ist. Der Drucksensor weist folglich hohe Herstellungskosten Weiterer Stand der Technik ist aus EP 3 029 443 A1 und EP 2 985 581 A1 bekannt.

### Offenbarung der Erfindung

### Vorteile der Erfindung

Die beanspruchte Erfindung ist in den unabhängigen Ansprüchen 1 und 7 definiert.

Ausführungsformen der vorliegenden Erfindung können in vorteilhafter Weise ermöglichen, einen technisch einfach ausgebildeten und kostengünstig herstellbaren Drucksensor aufzuzeigen, bzw. können ermöglichen, kostengünstig und technisch einfach einen Drucksensor herzustellen.

Gemäß einem ersten Aspekt der Erfindung wird ein Drucksensor nach Anspruch 1 vorgeschlagen.

Vorteilhaft hieran ist, dass der Drucksensor typischerweise technisch einfach ausgebildet ist. Zudem ist der Drucksensor in der Regel kostengünstig herstellbar. Darüber hinaus kann im Allgemeinen der Drucksensor kompakt ausgebildet sein, d.h. der Drucksensor kann wenig Volumen bzw. Raum einnehmen.

Gemäß einem zweiten Aspekt der Erfindung wird ein Verfahren zum Herstellen eines Drucksensors nach Anspruch 7 vorschlagen.

Vorteilhaft hieran ist, dass der Drucksensor typischerweise technisch einfach und kostengünstig hergestellt wird. Der Drucksensor kann im Allgemeinen kompakt ausgebildet sein, d.h. der Drucksensor kann wenig Volumen bzw. Raum einnehmen. Zudem ist in der Regel kein aufwendiges Positionieren des Schaltungsträgers in Bezug auf das Gehäuseelement notwendig. Dies senkt im Allgemeinen die Herstellungszeit. Ein weiterer Vorteil ist, dass im Allgemeinen eine Verbindung der Ansteuer- und/oder Auswerteschaltung mit Masse beim Herstellen des Drucksensors hergestellt wird.

Somit kann der Drucksensor beim Herstellen typischerweise an die notwendigen Anforderungen flexibel angepasst werden.

Der Drucksensor kann insbesondere ein Hochdrucksensor zum Messen bzw. Bestimmen von hohen Drücke, z.B. im Bereich von ca. 10 bar bis ca. 4000 bar, sein.

Ideen zu Ausführungsformen der vorliegenden Erfindung können unter anderem als auf den nachfolgend beschriebenen Gedanken und Erkenntnissen beruhend angesehen werden.

Gemäß einer Ausführungsform ist die Ansteuer- und/oder Auswerteschaltung auf zwei gegenüberliegenden Seiten des Schaltungsträgers angeordnet. Hierdurch kann der Drucksensor typischerweise besonders kompakt bzw. raumsparend ausgebildet sein.

Gemäß der beanspruchten Erfindung umfasst der Drucksensor ferner eine Erdungsfeder zum Verbinden der Ansteuer- und/oder Auswerteschaltung mit Masse. Hierdurch kann in der Regel technisch einfach eine Verbindung mit Masse hergestellt werden. Zudem ist die Position des Schaltungsträgers in dem Drucksensor typischerweise technisch einfach festgelegt.

Gemäß der beanspruchten Erfindung weist das Trägerelement eine Aussparung zum Aufnehmen der Erdungsfeder auf. Hierdurch ist die Erdungsfeder in der Regel technisch einfach und verliersicher angeordnet.

Gemäß einer Ausführungsform umfasst der Drucksensor ferner mindestens eine Anschlussfeder zum elektrischen Anschließen der Ansteuer- und/oder Auswerteschaltung an weitere Elemente. Ein Vorteil hiervon ist, dass der Drucksensor typischerweise technisch einfach und kostengünstig mit weiteren Elementen elektrisch verbunden ist.

Gemäß einer Ausführungsform ist der Schaltungsträger durch eine formschlüssige und/oder kraftschlüssige Verbindung mit dem Trägerelement verbunden. Vorteilhaft hieran ist, dass der Schaltungsträger im Allgemeinen technisch einfach und lösbar mit dem Trägerelement verbunden ist. Zudem ist die Verbindung in der Regel bei der Herstellung des Drucksensors schnell herstellbar.

Gemäß einer Ausführungsform ist der Schaltungsträger mittels einer Rastverbindung mit dem Trägerelement verbunden. Vorteilhaft hieran ist, dass der Schaltungsträger in der Regel technisch besonders einfach und kostengünstig mit dem Trägerelement verbunden ist.

Gemäß einer Ausführungsform ist das Trägerelement durch eine Rastverbindung in dem Gehäuseelement befestigt. Vorteilhaft hieran ist, dass das Trägerelement typischerweise besonders sicher und kostengünstig in dem Gehäuseelement befestigt ist.

Gemäß der beanspruchten Erfindung wird im Verfahren eine Erdungsfeder zum Verbinden der Ansteuer- und/oder Auswerteschaltung mit Masse in eine Aussparung des Trägerelements eingebracht, nach der beanspruchten Erfindung bevor der Schaltungsträger mit dem Trägerelement verbunden wird. Ein Vorteil hiervon ist, dass im Allgemeinen technisch einfach eine Verbindung mit Masse hergestellt wird. Zudem wird die Erdungsfeder typischerweise technisch einfach und verliersicher angeordnet.

Gemäß einer Ausführungsform des Verfahrens ist die Ansteuer- und/oder Auswerteschaltung auf zwei gegenüberliegenden Seiten des Schaltungsträgers angeordnet. Hierdurch kann typischerweise ein Drucksensor, der besonders kompakt bzw. raumsparend ist, hergestellt werden.

Gemäß einer Ausführungsform des Verfahrens werden der Schaltungsträger mit dem Trägerelement mittels einer Rastverbindung und/oder das Trägerelement mit dem Gehäuseelement mittels einer Rastverbindung verbunden. Hierdurch werden im Allgemeinen besonders sicherer und technisch einfache Verbindungen zwischen den verschiedenen Elementen hergestellt. Eine Rastverbindung ist typischerweise insbesondere kostengünstig. Dies senkt die in der Regel Herstellungskosten bzw. die für die Herstellung benötigte Zeit.

Es wird darauf hingewiesen, dass einige der möglichen Merkmale und Vorteile der Erfindung hierin mit Bezug auf unterschiedliche Ausführungsformen des Drucksensors bzw. des Verfahrens zum Herstellen eines Drucksensors beschrieben sind. Ein Fachmann erkennt, dass die Merkmale in geeigneter Weise kombiniert, angepasst oder ausgetauscht werden können, um zu weiteren Ausführungsformen der Erfindung zu gelangen.

### Kurze Beschreibung der Zeichnungen

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.
- Fig. 1 zeigt: eine perspektivische Ansicht eines Schaltungsträgers mit einer Ansteuer- und/oder Auswerteschaltung und ein Trägerelement einer Ausführungsform des erfindungsgemäßen Drucksensors vor dem Zusammensetzen;
- Fig. 2 zeigt: den Schaltungsträger aus Fig. 1, der mit dem Trägerelement aus Fig. 1 verbunden wurde, und ein unteres Gehäuseelement der Ausführungsform des erfindungsgemäßen Drucksensors;
- Fig. 3 zeigt: eine Ausführungsform des erfindungsgemäßen Drucksensors;
- Fig. 4 zeigt: eine Querschnittsansicht des Schaltungsträgers, der mit dem Trägerelement verbunden wurde, aus Fig. 2; und
- Fig. 5 zeigt: eine Querschnittsansicht des Drucksensors aus Fig. 3.

Die Figuren sind lediglich schematisch und nicht maßstabsgetreu. Gleiche Bezugszeichen bezeichnen in den Figuren gleiche oder gleichwirkende Merkmale.

### Ausführungsformen der Erfindung

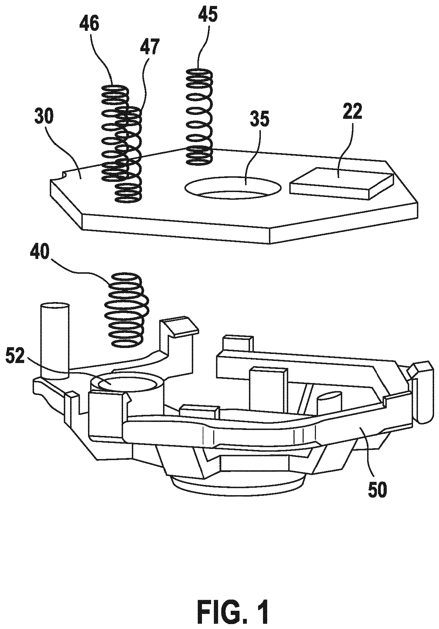

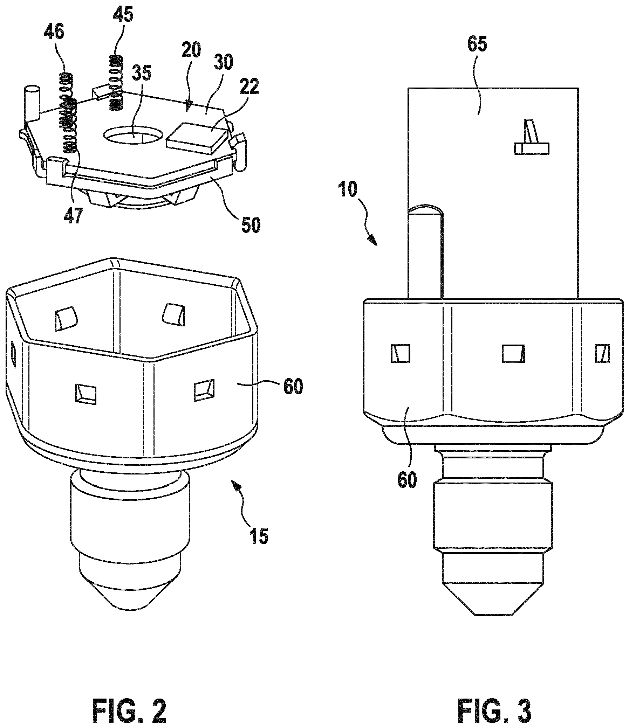

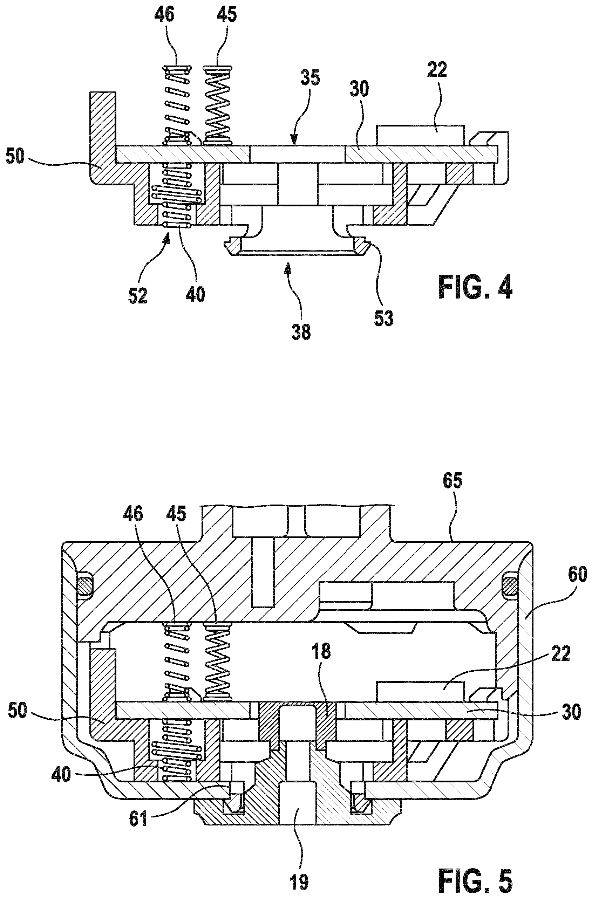

Fig. 1 zeigt eine perspektivische Ansicht eines Schaltungsträgers 30 mit einer Ansteuer- und/oder Auswerteschaltung 20 und ein Trägerelement 50 einer Ausführungsform des erfindungsgemäßen Drucksensors 10 vor dem Zusammensetzen. Fig. 2 zeigt den Schaltungsträger 30 aus Fig. 1, der mit dem Trägerelement 50 aus Fig. 1 verbunden wurde, und ein unteres Gehäuseelement 60 der Ausführungsform des erfindungsgemäßen Drucksensors 10. Fig. 3 zeigt eine Ausführungsform des erfindungsgemäßen Drucksensors 10. Fig. 4 zeigt eine Querschnittsansicht des Schaltungsträgers 30, der mit dem Trägerelement 50 verbunden wurde, aus Fig. 2. Fig. 5 zeigt eine Querschnittsansicht des Drucksensors 10 aus Fig. 3.

Der Drucksensor 10 ist zum Messen eines Drucks eines Fluids, insbesondere einer Flüssigkeit, wie z.B. Öl, ausgebildet. Insbesondere ist der Drucksensor 10 zum Messen von hohen und sehr hohen Drücken ausgebildet.

Der Druck umfasst eine Drucksensorgrundeinheit 15. Die Drucksensorgrundeinheit 15 weist ein Sensorelement 18, insbesondere ein Drucksensorelement 18, zum Erfassen des Drucks des Fluids und ein (unteres) Gehäuseelement 60 auf. Das Sensorelement 18 erfasst einen Druck eines Fluids in einem Druckkanal 19.

Eine Ansteuer- und/oder Auswerteschaltung 20 zum Ansteuern und/oder Auswerten eines Messsignals des Sensorelements 18 ist ebenfalls Teil des Drucksensors 10. Die Ansteuer- und/oder Auswerteschaltung 20 empfängt das Messsignal des Sensorelements 18 und verarbeitet bzw. analysiert das Messsignal, um daraus den Druck des Fluids zu bestimmen. Die Ansteuerund/oder Auswerteschaltung 20 umfasst normalerweise mehrere Halbleiterbauelemente 22. In den Zeichnungen ist nur ein Halbleiterbauelement 22 exemplarisch dargestellt. Die Ansteuer- und/oder Auswerteschaltung 20 kann einen oder mehrere Halbleiterchips bzw. integrierte Schaltungen aufweisen. Die Schaltung kann eine Ansteuerschaltung zum Ansteuern des Drucksensors 18 umfassen bzw. sein. Zusätzlich oder alternativ kann die Schaltung eine Auswerteschaltung 20 zum Auswerten des Messsignals des Drucksensors 18 sein.

Die Ansteuer- und/oder Auswerteschaltung 20 ist auf einem Schaltungsträger 30 angeordnet. Der Schaltungsträger 30 kann z.B. eine Leiterplatte umfassen. Die Ansteuer- und/oder Auswerteschaltung 20 kann auf den beiden gegenüberliegenden Seiten des Schaltungsträgers 30 angeordnet bzw. befestigt sein.

Auf einer ersten Seite (in Fig. 1 die obere Seite) des Schaltungsträgers 30 sind eine oder mehrere Anschlussfedern 45, 46, 47 angeordnet. Die Anschlussfedern 45, 46, 47 sind mit der Ansteuer- und/oder Auswerteschaltung 20 elektrisch verbunden. Die Anschlussfedern 45, 46, 47 dienen zum elektrischen Verbinden der Ansteuer- und/oder Auswerteschaltung 20 mit weiteren Elementen. Die weiteren Elemente können Teil des Drucksensors 10 sein oder kein Teil des Drucksensors 10 sein. Die weiteren Elemente können z.B. eine Steuereinheit umfassen, die auf Grundlage des bestimmten Drucks bestimmte Maßnahmen ergreift.

Der Schaltungsträger 30 wird mit einem Trägerelement 50 verbunden bzw. in diesem befestigt. Die Verbindung bzw. Befestigung kann formschlüssig und/oder kraftschlüssig sein. Insbesondere kann die Verbindung bzw. Befestigung mittels einer oder mehrere Rastverbindung durchgeführt werden.

Das Trägerelement 50 besteht aus einem elektrisch-nichtleitenden Material bzw. einem elektrisch isolierenden Material. Hierdurch werden Kurzschlüsse vermieden. Das Trägerelement 50 ist einstückig ausgebildet. Das Trägerelement 50 kann spritzgegossen oder durch Tiefziehen hergestellt werden. Das Material des Trägerelements 50 kann z.B. Kunststoff umfassen oder Kunststoff sein. Das Trägerelement 50 weist eine Aussparung 52 zum Aufnehmen einer Erdungsfeder 40 auf. Die Erdungsfeder 40 befindet sich auf einer der Anschlussfeder 45, 46, 47 abgewandten Seite des Schaltungsträgers 30. Die Erdungsfeder 40 verbindet einen Teil der Ansteuer- und/oder Auswerteschaltung 20 elektrisch mit Masse und/oder dem Gehäuseelement 60.

Durch die kraftschlüssige und/oder formschlüssige Verbindung kann der Schaltungsträger 30 beidseitig bestückt sein bzw. werden. Hierdurch kann das Volumen, das der Drucksensor 10 bzw. der Schaltungsträger 30 mit der Ansteuer- und/oder Auswerteschaltung 20 benötigt, reduziert bzw. minimiert werden.

Nach dem Befestigen des Schaltungsträgers 30 an dem Trägerelement 50 werden diese miteinander verbundenen Elemente (auch Schaltungsträgerbaugruppe genannt) in ein unteres Gehäuseelement 60 des Drucksensors 10 eingesetzt. Fig. 2 zeigt den Zustand vor diesem Einsetzen in das untere Gehäuseelement 60.

Das untere Gehäuseelement 60 weist eine (regelmäßige) hexagonale Form, insbesondere Innenform, auf. Der Schaltungsträger 30 weist eine hexagonale Form auf. Das Trägerelement 50 weist ein hierzu komplementäre hexagonale Form auf. Hierdurch wird der Schaltungsträger 30 beim Einsetzen in das Trägerelement 50 technisch einfach ausgerichtet. Auch beim Einsetzen des Trägerelements 50 in das Gehäuseelement 60 wird das Trägerelement 50 mit dem Schaltungsträger 30 technisch einfach und schnell ausgerichtet.

Der Schaltungsträger 30 weist in seiner Mitte eine Aussparung 35, insbesondere eine kreisrunde Aussparung auf. Beim Einsetzen des Schaltungsträgers 30 in das untere Gehäuseelement 60 gelangt der Drucksensor 10, der oberhalb eines Druckkanals 19 zum Aufnehmen des zu messenden Fluids angeordnet ist, in diese Aussparung 35. Gleichzeitig kann durch das Anordnen des Schaltungsträgers 30 mit der Ansteuer- und/oder Auswerteschaltung 20 in dem unteren Gehäuseelement 60 eine elektrische Verbindung zwischen dem Drucksensor 10 und der Ansteuer- und/oder Auswerteschaltung 20 hergestellt werden. Der Drucksensor 10 kann hierfür den Schaltungsträger 30 in dem Bereich der Aussparung 35 des Schaltungsträgers 30 kontaktieren bzw. berühren.

Das Trägerelement 50 weist in seiner Mitte eine Öffnung 38 in Form einer Aussparung auf. Beim Einsetzten des Trägerelements 50 in das untere Gehäuseelement 60 gelangt der Drucksensor 10 und ein Teil des Druckkanals 19 in diese Öffnung 38.

Somit kann der Drucksensor 10 sehr kompakt bzw. volumensparend sein.

Das Trägerelement 50 wird durch eine kraftschlüssige und/oder formschlüssige Verbindung in dem unteren Gehäuseelement 60 befestigt. Insbesondere kann die Verbindung zwischen dem Trägerelement 50 und dem unteren Gehäuseelement 60 eine Rastverbindung bzw. Clipsverbindung sein.

Das untere Gehäuseelement 60 weist hierfür einen oder mehrere nach Innen vorstehenden Vorsprünge 61 auf. Der Vorsprung 61 kann umlaufend sein. Alternativ kann das untere Gehäuseelement 60 mehrere über den Umfang gleichmäßig oder ungleichmäßig verteilte Vorsprünge 61 aufweisen.

Das Trägerelement 50 weist eine oder mehrere zu dem Vorsprung 61 oder den Vorsprüngen 61 komplementäre Rastnasen 53 auf. Die Rastnase 53 kann umlaufend ausgebildet sein. Alternativ können mehrere über den Umfang gleichmäßig oder ungleichmäßig verteilte Rastnasen 53 vorhanden sein.

Die Rastnase 53 oder die Rastnasen 53 des Trägerelements 50 werden unter dem Vorsprung 61 oder den Vorsprüngen 61 des unteren Gehäuseelements 60 eingerastet bzw. eingeklippst bzw. eingepresst. Auf diese Weise kann technisch einfach, kostengünstig und schnell eine sichere Befestigung des Trägerelements 50 und somit auch des mit dem Trägerelement 50 sicher verbundenen Schaltungsträgers 30 mit der Ansteuer- und/oder Auswerteschaltung 20 erreicht werden.

Die Rastverbindung bzw. Klippsverbindung bzw. Pressverbindung kann lösbar ausgebildet sein. Auf diese Weise kann das Trägerelement 50 mit dem Schaltungsträger 30 wieder aus dem unteren Gehäuseelement 60 entnommen werden, um diese auszutauschen oder zu untersuchen.

Schließlich wird ein oberes Gehäuseelement 65 mit dem unteren Gehäuseelement 60 verbunden. Nun ist das Trägerelement 50 mit dem Schaltungsträger 30 und der Ansteuer- und/oder Auswerteschaltung 20 gegenüber der Umgebung bzw. Umwelt geschützt.

Wie in den Querschnittsansichten der Fig. 4 bzw. Fig. 5 deutlich zu erkennen, ist die Erdungsfeder 40 zwischen der Unterseite des Schaltungsträgers 30 und dem untere Gehäuseelement 60 in der Aussparung 52 des Trägerelements 50 verliersicher angeordnet. Gleichzeitig wird die Position des Trägerelements 50 in dem unteren Gehäuseelement 60 durch die Erdungsfeder 40 und die Anschlussfeder 45, 46, 47 sicher festgelegt.

Die Anschlussfedern 45, 46, 47 stellen eine elektrische Verbindung zwischen der Ansteuer- und/oder Auswerteschaltung 20 und einem Teil in dem oberen Gehäuseelement 65 angeordneten Teil her. Somit wird ein technisch einfacher elektrischer Anschluss der Ansteuer- und/oder Auswerteschaltung 20 hergestellt.

Der Drucksensor 10 lässt sich technisch einfach und ohne Werkzeug bzw. Maschinen zusammensetzen bzw. verbinden. Insbesondere ist keine stoffschlüssige Verbindung bzw. kein Verkleben notwendig, um den Schaltungsträger 30 mit dem Trägerelement 50 bzw. das Trägerelement 50 mit dem unteren Gehäuseelement 60 des Drucksensors 10 zu verbinden.

## Patentansprüche

1. Drucksensor (10) zum Messen eines Drucks eines Fluids, wobei der Drucksensor (10)
- ein Sensorelement (18) zur Erfassung des Drucks des Fluids,
- eine Ansteuer- und/oder Auswerteschaltung (20) zum Ansteuern und/oder Auswerten eines Messsignals des Sensorelements (18),
- einen Schaltungsträger (30), wobei die Ansteuer- und/oder Auswerteschaltung (20) auf dem Schaltungsträger (30) angeordnet ist,
- ein Trägerelement (50), wobei der Schaltungsträger (30) an dem Trägerelement (50) befestigt ist, und
- ein Gehäuseelement (60), wobei das Trägerelement (50) mit dem Schaltungsträger (30) formschlüssig und/oder kraftschlüssig in dem Gehäuseelement (60) befestigt ist,
umfasst,
und wobei das Trägerelement (50) aus einem elektrisch-nichtleitenden Material einstückig ausgebildet ist, **dadurch gekennzeichnet, dass** der Drucksensor (10) ferner eine Erdungsfeder (40) zum Verbinden der Ansteuer- und/oder Auswerteschaltung (20) mit Masse und dem Gehäuseelement (60) umfasst, wobei die Erdungsfeder (40) in einer Aussparung (52) des Trägerelements (50) verliersicher aufgenommen ist.

2. Drucksensor (10) nach Anspruch 1, wobei
die Ansteuer- und/oder Auswerteschaltung (20) auf zwei gegenüberliegenden Seiten des Schaltungsträgers (30) angeordnet ist.

3. Drucksensor (10) nach einem der vorhergehenden Ansprüche, wobei der Drucksensor (10) ferner mindestens eine Anschlussfeder (45, 46, 47) zum elektrischen Anschließen der Ansteuer- und/oder Auswerteschaltung (20) an weitere Elemente umfasst.

4. Drucksensor (10) nach einem der vorhergehenden Ansprüche, wobei der Schaltungsträger (30) durch eine formschlüssige und/oder kraftschlüssige Verbindung mit dem Trägerelement (50) verbunden ist.

5. Drucksensor (10) nach Anspruch 4, wobei
der Schaltungsträger (30) mittels einer Rastverbindung mit dem Trägerelement (50) verbunden ist.

6. Drucksensor (10) nach einem der vorhergehenden Ansprüche, wobei das Trägerelement (50) durch eine Rastverbindung in dem Gehäuseelement (60) befestigt ist.

7. Verfahren zum Herstellen eines Drucksensors (10) zum Messen eines Drucks eines Fluids, wobei das Verfahren folgende Schritte umfasst:
- Bereitstellen einer Drucksensorgrundeinheit (15), wobei die Drucksensorgrundeinheit (15) ein Gehäuseelement (60) und ein Sensorelement (18) zur Erfassung des Drucks des Fluids umfasst;
- Bereitstellen eines Schaltungsträgers (30) mit einer Ansteuer- und/oder Auswerteschaltung (20) zum Ansteuern und/oder Auswerten eines Messsignals des Sensorelements (18);
- Verbinden des Schaltungsträgers (30) mit einem aus einem elektrisch-nichtleitenden Material einstückig ausgebildeten Trägerelement (50) durch Formschluss und/oder Kraftschluss; und
- Einsetzen des Trägerelements (50) mit dem Schaltungsträger (30) in das Gehäuseelement (60) und Verbinden des Trägerelements (50) mit dem Gehäuseelement (60), **dadurch gekennzeichnet, dass** eine Erdungsfeder (40) zum Verbinden der Ansteuer- und/oder Auswerteschaltung (20) mit Masse und dem Gehäuseelement (60) in eine Aussparung (52) des Trägerelements (50) verliersicher eingebracht wird, bevor der Schaltungsträger (30) mit dem Trägerelement (50) verbunden wird.

## Claims

1. Pressure sensor (10) for measuring a pressure of a fluid, the pressure sensor (10) comprising
- a sensor element (18) for detecting the pressure of the fluid,
- an activation and/or evaluation circuit (20) for activating and/or evaluating a measuring signal of the sensor element (18),
- a circuit carrier (30), the activation and/or evaluation circuit (20) being provided on the circuit carrier (30),
- a carrier element (50), the circuit carrier (30) being secured on the carrier element (50), and
- a housing element (60), the carrier element (50) together with the circuit carrier (30) being interlockingly and/or frictionally secured in the housing element (60),
and the carrier element (50) being formed in one piece from an electrically non-conducting material, **characterized in that** the pressure sensor (10) also comprises an earthing spring (40) for connecting the activation and/or evaluation circuit (20) to earth and to the housing element (60), the earthing spring (40) being captively located in a cutout (52) in the carrier element (50).

2. Pressure sensor (10) according to Claim 1,
the activation and/or evaluation circuit (20) being arranged on two opposite sides of the circuit carrier (30) .

3. Pressure sensor (10) according to either of the preceding claims,
the pressure sensor (10) also comprising at least one connection spring (45, 46, 47) for electrically connecting the activation and/or evaluation circuit (20) to further elements.

4. Pressure sensor (10) according to one of the preceding claims,
the circuit carrier (30) being connected to the carrier element (50) by an interlocking and/or frictional connection.

5. Pressure sensor (10) according to Claim 4,
the circuit carrier (30) being connected to the carrier element (50) by means of a snap-in connection.

6. Pressure sensor (10) according to one of the preceding claims,
the carrier element (50) being secured in the housing element (60) by a snap-in connection.

7. Method for producing a pressure sensor (10) for measuring a pressure of a fluid, the method comprising the following steps:
- providing a pressure sensor base unit (15), the pressure sensor base unit (15) comprising a housing element (60) and a sensor element (18) for detecting the pressure of the fluid;
- providing a circuit carrier (30) including an activation and/or evaluation circuit (20) for activating and/or evaluating a measuring signal of the sensor element (18);
- connecting the circuit carrier (30) to a carrier element (50), which is formed in one piece from an electrically non-conducting material, by interlocking and/or frictional engagement; and
- inserting the carrier element (50) together with the circuit carrier (30) into the housing element (60) and connecting the carrier element (50) to the housing element (60), **characterized in that** an earthing spring (40) for connecting the activation and/or evaluation circuit (20) to earth and to the housing element (60) is captively introduced into a cutout (52) in the carrier element (50) before the circuit carrier (30) is connected to the carrier element (50).

## Revendications

1. Capteur de pression (10) destiné à mesurer une pression d'un fluide, le capteur de pression (10) comprenant
- un élément de détection (18) destiné à détecter la pression du fluide,
- un circuit de commande et/ou d'évaluation (20) destiné à commander et/ou évaluer un signal de mesure de l'élément de détection (18),
- un support de circuit (30), le circuit de commande et/ou d'évaluation (20) étant disposé sur le support de circuit (30),
- un élément de support (50), le support de circuit (30) étant fixé à l'élément de support (50), et
- un élément de boîtier (60), l'élément de support (50) étant fixé au support de circuit (30) par une liaison par complémentarité de formes et/ou en force dans l'élément de boîtier (60),
et l'élément de support (50) étant réalisé d'une seule pièce à partir d'un matériau électriquement non conducteur, **caractérisé en ce que** le capteur de pression (10) comporte également un ressort de mise à la terre (40) destiné à relier le circuit de commande et/ou d'évaluation (20) à la terre et à l'élément de boîtier (60), le ressort de mise à la terre (40) étant logé de manière imperdable dans un évidement (52) de l'élément de support (50).

2. Capteur de pression (10) selon la revendication 1, le circuit de commande et/ou d'évaluation (20) étant disposé sur deux côtés opposés du support de circuit (30) .

3. Capteur de pression (10) selon l'une des revendications précédentes, le capteur de pression (10) comprenant en outre au moins un ressort de raccordement (45, 46, 47) destiné à raccorder électriquement le circuit de commande et/ou d'évaluation (20) à d'autres éléments.

4. Capteur de pression (10) selon l'une des revendications précédentes, le support de circuit (30) étant relié à l'élément de support (50) par une liaison par complémentarité de formes et/ou en force.

5. Capteur de pression (10) selon la revendication 4, le support de circuit (30) étant relié à l'élément de support (50) au moyen d'une liaison par encliquetage.

6. Capteur de pression (10) selon l'une des revendications précédentes, l'élément de support (50) étant fixé dans l'élément de boîtier (60) par une liaison par encliquetage.

7. Procédé de fabrication d'un capteur de pression (10) destiné à mesurer une pression d'un fluide, le procédé comprenant les étapes suivantes :
- fournir une unité de base de capteur de pression (15), l'unité de base de capteur de pression (15) comprenant un élément de boîtier (60) et un élément de détection (18) destiné à détecter la pression du fluide ;
- pourvoir le support de circuit (30) d'un circuit de commande et/ou d'évaluation (20) destiné à commander et/ou évaluer un signal de mesure de l'élément de détection (18) ;
- relier le support de circuit (30) à un élément de support (50) réalisé d'une seule pièce à partir d'un matériau électriquement non conducteur par une liaison par complémentarité de formes et/ou en force ; et
- insérer l'élément de support (50) conjointement avec le support de circuit (30) dans l'élément de boîtier (60) et relier l'élément de support (50) à l'élément de boîtier (60), **caractérisé en ce qu'**un ressort de mise à la terre (40) destiné à relier le circuit de commande et/ou d'évaluation (20) à la terre et à l'élément de boîtier (60) est introduit de manière imperdable dans un évidement (52) de l'élément de support (50) avant que le support de circuit (30) ne soit relié à l'élément de support (50).
